# EUROPEAN PATENT SPECIFICATION

(11) **EP 3 448 145 B1**
(45) Date of publication and mention of the grant of the patent: **08.07.2020**
(21) Application number: 17717216.0
(22) Date of filing: 29.03.2017
(51) Int. Cl.: A01F 12/60, A01D 41/12, A01D 41/127

(54) **A LEVEL SENSOR SYSTEM**
PEGELSENSORSYSTEM
SYSTÈME DE CAPTEUR DE NIVEAU

(30) Priority: 26.04.2016 US 201662327523 P
(43) Date of publication of application: 06.03.2019
(73) Proprietor: AGCO Corporation, Duluth, GA 30096 (US)
(72) Inventor: DUCROQUET, Frederic, 36042 Breganze (IT)
(74) Representative: AGCO Intellectual Property Department
(86) International application number: PCT/IB2017/000331
(87) International publication number: WO 2017/187250

(56) References cited:
- WO-A1-2015/052563
- CA-A- 1 209 225
- US-A- 3 246 313

## Description

### Field of the Invention

The present invention relates to a level sensor system, in particular for measuring a level of grain in a grain bin.

### Background of the Invention

Grain bins are used to hold harvested grain, and are often provided in combination with an agricultural combine, to retain newly-harvested grain after initial harvesting and during transport to a dedicated storage facility. An example of a grain bin having an auger conveyor is provided in US 4,106,649. US3,246,313A1 gives another grain bin example.

When harvesting and transporting grain, an operator needs to be aware of the grain fill level of a grain bin, to prevent grain spillage. It is known to provide simple level sensors around the periphery of a grain bin, such that a warning can be generated when the level of the contained grain approaches the top level of the grain bin. An operator can then take action to prevent over-filling of the grain bin.

However, such level sensor systems only detect the height of the grain at the sides of the grain bin, and do not provide any indication of the shape profile of the contained grain, e.g. if the middle of the accumulated grain is formed in a peak. As a result, an operator must take additional care to visually monitor for the shape profile of the grain level in the bin, to ensure that the accumulated grain is not in danger of spillage when traversing an incline, and that the accumulated grain does not strike overhead obstacles, e.g. power lines.

It is an object of the invention to provide an improved grain level sensing system, to address the above problems.

### Summary of the Invention

Accordingly, there is provided a grain bin having a grain level sensor system, the grain bin comprising a grain conveyor having an outlet for expelling grain into the grain bin, the grain level sensor system comprising:
a floater adapted to sit on top of expelled grain from the grain conveyor, wherein the grain level in the grain bin is determined based on the height of the floater above the outlet; characterised in that the floater is coupled with the outlet of the grain conveyor and the system comprises
a linkage connecting the outlet and the floater, such that the floater is moveable relative to the outlet.

The floater is arranged to follow the top level of the grain which is expelled into the grain bin from the conveyor, and as a result the height of the floater above the conveyor outlet provides an accurate indication of the height of the grain level in the grain bin. In addition, the floater is connected to the conveyor, and is arranged so as to be positioned above the outlet of the conveyor. Accordingly, the floater is located at that point likely to be the highest accumulation of grain in the grain bin, i.e. at the outlet of the conveyor, thereby providing an indication of the peak level of grain in the grain bin. Preferably, the grain bin is provided as part of a combine harvester.

The floater preferably has a planar profile, such that the floater sits on top of and is carried by a moving grain level. As a result, the floater is adapted to rise and fall with the height of the grain level in the grain bin. It will be understood that the linkage used to connect the floater and the outlet is a low-friction linkage, such that minimal force is required to move the floater and connected linkage.

Preferably, the linkage comprises at least one angle sensor or rotary position sensor arranged to measure at least one angle of extension of the linkage, wherein the height of the floater above the outlet is calculated based on said at least one angle of extension.

As the dimensions of the linkage are known, by measuring the angle of extension of the linkage it is possible to accurately determine the location of the floater relative to the outlet.

Preferably, the grain conveyor is moveable relative to the grain bin, preferably the grain conveyor is pivotally mounted to the grain bin.

The conveyor may be moveable within the grain bin, in that the conveyor may rise with the action of a rising grain level in the bin. Accordingly, the calculation of the grain level in the grain bin may further be based on the position of the grain conveyor in the grain bin. The grain conveyor is preferably an auger conveyor.

Preferably, the grain conveyor comprises at least one angle sensor or rotary position sensor arranged to measure the pivot angle of the grain conveyor relative to the grain bin, wherein the calculation of the grain level in bin is based on said pivot angle.

Determining the position of the grain conveyor in the grain bin allows for a calculation of the location of the outlet of the grain conveyor in the grain bin. By determining the accurate position of the conveyor outlet, the position of the floater can then be accurately determined to calculate the grain level in the grain bin.

Preferably, the floater is made of an insulating or non-electrically conductive material, such as a plastics material, rubber or ceramics. Preferably, at least a portion of the linkage is made of an insulating or non-electrically conductive material.

By providing the floater, and possibly the linkage, in an insulating material, accordingly the danger of current arcing from overhead power lines is reduced.

Preferably, the system further comprises at least one level sensor arranged at a side of the grain bin to measure the grain level height at the side of the grain bin, wherein the height of the floater above the outlet and the grain level height at the side of the grain bin are used to determine a profile shape of the grain in the grain bin.

By providing a side level sensor in combination with the floater sensor, the grain level sensor system can determine if the grain bin capacity has been reached with a higher angle of repose than usual. The operator can then take action to prevent spillage, in case the grain pile flattens.

Preferably, the system is coupled with a data display system, wherein an indication of the determined grain level or grain shape profile is provided to an operator.

The data display system may comprise a display terminal arranged to provide information to an operator. Accordingly, the grain level sensor system is configured to communicate to such a display terminal to display information relating to the measured grain level in the grain bin.

Preferably, the system further comprises a warning system, wherein a warning is presented to an operator if the determined grain level or profile shape of grain exceeds a defined limit value.

Such a defined limit value may be set by a user, and/or may be adjusted based on different factors. In one aspect, the limit value may be based on stored terrain data, e.g. a current or future terrain slope. As a result, the safe grain level limits may be adjusted based on whether the grain bin is likely to traverse a slope, which may result in grain spillage. The predefined limit may additionally or alternatively be based on a current detected slope of the grain bin.

In a further aspect, the defined limit value may be based on a speed level. Accordingly, the safe grain level limit may be adjusted based on the current or predicted speed at which the grain bin is to travel, which may influence the likelihood of grain spillage from the grain bin.

The sensor system may be provided as a kit of parts, for installation or retrofitting on a new combine harvester or grain bin.

### Detailed Description of the Invention

Embodiments of the invention will now be described, by way of example only, with reference to the accompanying drawings, in which:
Fig. 1 is an illustration of a combine harvester having a grain bin with a grain level sensor system according to the invention;
Fig. 2 is a cross-sectional view of a grain bin with a grain level sensor system according to the invention; and
Fig. 3 is a cross-sectional view of the grain bin of Fig. 2 having a level of accumulated grain.

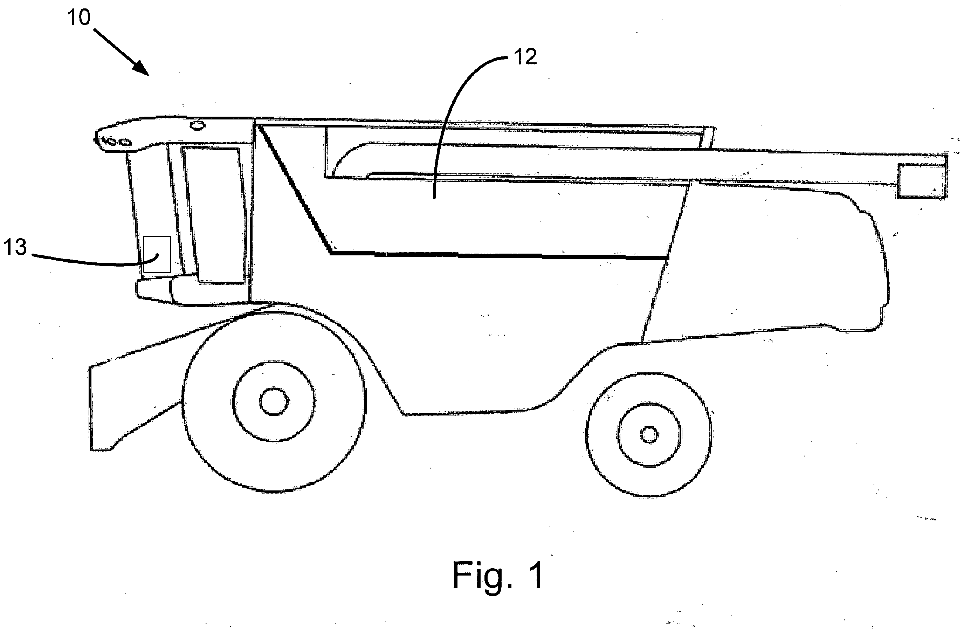

With reference to Fig. 1, a combine harvester is indicated at 10. The harvester 10 is provided with an integrated grain bin 12, which is used for the storage of harvested grain.

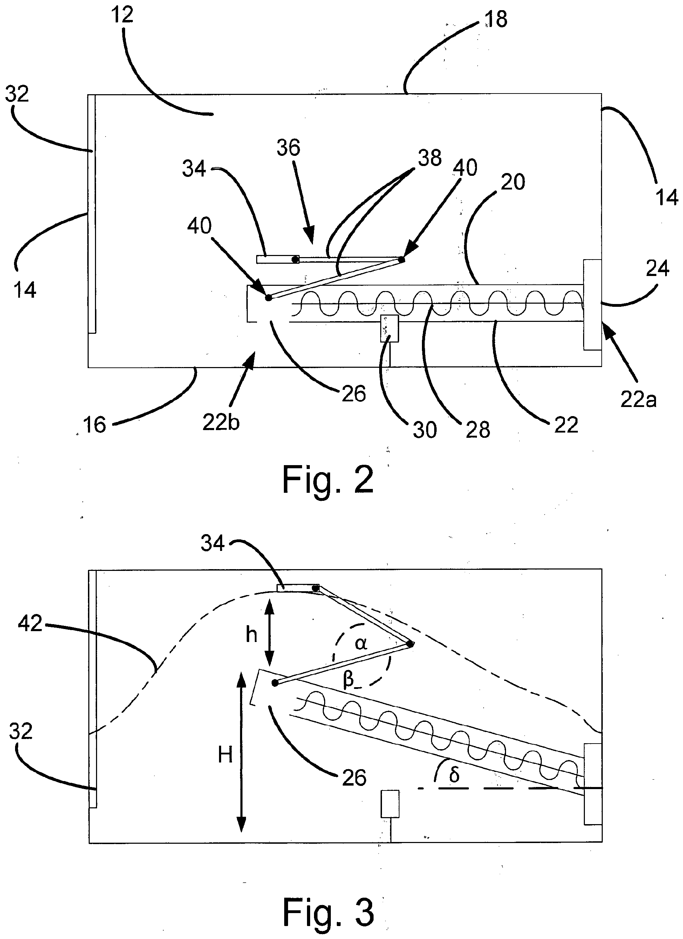

In Fig. 2, a cross-sectional view is provided of the grain bin 12, which comprises a grain level sensor system according to the invention. The grain bin 12 is defined by side walls 14 which extend from a bottom wall 16 towards an open end 18. The open end 18 of the grain bin 12 may be provided with adjustable doors or extension panels (not shown), which may be opened to provide access to the interior of the grain bin 12 or to provide for extended capacity of the bin 12.

The grain bin 12 is provided with a grain conveyor 20 which is used to expel harvested grain into the bin 12. In the embodiment shown the grain conveyor 20 is an auger conveyor, but it will be understood that any suitable conveyor design may be used.

The grain conveyor 20 is provided as an elongate tube 22 having an inlet 24 located at a first end 22a of the tube 22 and an outlet 26 provided at the opposite second end 22b of the tube 22. An auger 28 provided in the tube 22 allows for grain to be transferred from the inlet 24 to the outlet 26, to be expelled into the interior of the grain bin 12.

The conveyor 20 is pivotally mounted at the first end 22a, such that the conveyor 18 can pivot in an upwards direction, moving the second end 22b towards the open end 18 of the grain bin 12. A supporting arm 30 is provided on the bottom wall 16 of the grain bin 12, which is used to support the conveyor 20 in an at rest position at the base of the grain bin 12, as shown in Fig. 2.

The grain bin 12 is further provided with at least one sidewall level sensor 32, positioned at a side wall 14 of the bin 12. The sidewall level sensor 32 is arranged to detect the level of grain in the grain bin 12 at the side wall 14 of the bin 12. The sidewall level sensor 32 may comprise any suitable detector technology, e.g. mechanical, capacitive, optical, etc.

The grain level sensor system comprises a floater device 34 which is coupled with the second end 22b of the grain conveyor 20. A flexible linkage 36 is coupled between the floater 34 and the grain conveyor 20, such that the floater 34 can move relative to the outlet 26 of the conveyor 20. The floater 34 and linkage 36 are arranged at the upper side of the conveyor 20, the floater 34 moveable in an upward direction towards the open end 18 of the grain bin 12. The linkage 36 comprises a plurality of links 38 having pivot joints 40. In an alternative embodiment, the linkage 36 may comprise a single link 38 pivotally coupled to the body of the conveyor 20.

The floater 34 is formed of a light-weight planar design, such that the floater 34 will easily sit on top of a level of expelled grain. In addition, the linkage 36 is designed to be a low-friction linkage, wherein the floater 34 will rise on top of a rising grain level in the bin 12.

Fig. 2 shows the grain bin 12 without any contained grain. With reference to Fig. 3, the grain bin 12 is shown having an accumulated grain level, indicated by the dashed line 42. As grain is added to the bin 12 through the conveyor 20, the floater 34 sits on top of the rising grain level 42. As the floater 34 is arranged to be above the outlet 26 where the grain is expelled into the grain bin 12, accordingly the floater 34 will lie at or close to the peak of the accumulated grain level in the bin 12, being directly above the outlet 26. As a result, knowing the position of the floater 34 in the grain bin 12 provides a reliable indicator of the peak level of the accumulated grain in the bin 12.

In a first aspect, the height of the floater 34 above the outlet 26 of the conveyor 20 is measured to provide an indication of the height of the grain level 42 in the bin 12. Preferably, at least one rotary position sensor is arranged in at least one of the pivots 40 of the linkage 36, such that at least one angle of extension, α, β, of the linkage 36 can be measured. It will be understood that the at least one rotary position sensor is in communication with a controller (not shown), such that the controller is operable to determine the height, h, of the floater 34 above the outlet 26 of the conveyor 20, based on the measured angle of extension of the linkage 36, and the known dimensions of the links 38 of the linkage 36. Such a determination can be made using standard trigonometric calculations.

Once the height, h, of the floater 34 above the outlet 26 of the conveyor 20 is known, this can be used to calculate the height of the grain level 42 in the grain bin 12. In the embodiment of Figs. 2 & 3, where the grain conveyor 20 is pivotable relative to a side wall 14 of the grain bin 12, the sensor system is arranged to measure the pivot angle, δ, of the grain conveyor 20 relative to the grain bin 12, for example using a rotary position sensor provided at the first end 22a of the conveyor 20. Based on the known dimensions of the conveyor, and the detected pivot angle, δ, of the conveyor 20, the height, H, of the conveyor 20 above the bottom wall 16 of the grain bin 12 can be calculated using standard trigonometric calculations.

Knowing the height, h, of the floater 34 above the outlet 26 of the conveyor 20, and knowing the height, H, of the second end 22b of the conveyor 20 above the bottom wall 16 of the bin 12, the actual height of the floater 34 in the grain bin 12 can be easily determined, h + H. As the floater 34 is arranged to sit on top of the grain level 42 in the bin 12, accordingly the height of the floater 34 in the bin 12 accurately reflects the height of the grain level 42 in the bin 12.

The calculation of the height of the grain level 42 in the bin 12 may be calculated using a suitable controller arranged to receive the output of the various sensors used in the grain level sensor system. The controller may be positioned at the grain bin 12, or may be located at a driver station 13 (Fig. 1), of the combine 10.

Once the grain level height is determined from the floater 34 height, this information can be communicated to an operator of the combine 10. Preferably, the determined grain level height is communicated to the driver station 13, wherein it can be displayed on a data display device, e.g. a display terminal. A combine operator can then easily monitor the grain level height in the bin 12, and can take appropriate action once the grain level height indicates that the grain bin 12 is full.

While the conveyor of the embodiment shown is moveable relative to the walls of the grain bin 12, it will be understood that in an alternative configuration, the conveyor may be fixed relative to the grain bin, i.e. not pivotable relative to the side walls 14 of the grain bin 12. In such an embodiment, the height of the floater 34 above the outlet 26, once added to the set height of the outlet 26 above the bottom wall 16 of the grain bin 12, is a direct measurement of the height of the grain level in the grain bin 12. For such an embodiment, it will be understood that the linkage 36 of the sensor system may comprise an array of multiple links 38, to ensure that the full extension height of the floater 34 can cover the full height of the grain bin 12.

The grain level height determined by the floater 34 may be combined with the outputs of other grain level sensors, e.g. sidewall level sensor 32, to provide an indication of the shape profile of the grain in the bin 42. For example, if the grain level height at the floater 34 is substantially similar to the grain level height at the sidewall level sensor 32, it can be determined that the grain level within the bin 12 is largely flat and stable. However, if the grain level height at the floater 34 is greater than the grain level height at the sidewall level sensor 32, it can be determined that the grain within the bin 12 lies in a domed shape. The difference in height between the floater 34 and the detected sidewall grain level can provide an indication of the angle of repose of the grain in the bin 12, which describes the shape profile of the contained grain. In addition, the shape profile of the contained grain can provide an indication of the fill status of the grain bin 12, i.e. if there is a substantial amount of unfilled space adjacent the sidewalls 14 of the bin 12.

The determined shape profile of the grain can be communicated to the combine operator via the driver station 13. In particular, if the shape profile of the contained grain indicates a relatively steep angle of repose, the system can be configured to provide a warning to the combine operator that the contained grain may be in danger of spillage, in the event of driving over an inclined surface, driving at a relatively high speed, and/or sudden braking. When such a warning is issued, the operator may be prompted to take precautionary measures, e.g. ceasing further filling of the grain bin, reducing speed, changing route to avoid excessive inclines, smoothing the contained grain level to reduce the angle of repose of the grain, etc.

Additionally or alternatively, the controller may be provided with information relating to a predicted route of the combine 10, in particular relating to predicted slopes to be traversed and/or expected speeds of the combine 10. In this instance, the controller can determine if the predicted route may result in grain spillage, based on the detected grain height and/or shape profile of the contained grain. If the risk of grain spillage exceeds a threshold, the controller can display a warning to the operator, either to adjust the predicted route, or to take further actions to prevent spillage.

The floater 34 and preferably at least a portion of the linkage 36 is formed from an insulating or non-conductive material, e.g. plastics or rubber, to reduce the risk of current arcing when passing under overhead power lines.

It will be understood that further embodiments of the invention are provided, having alternatives to the linkage connection between the conveyor 20 and the floater 34. For example, the floater may be connected to the conveyor using a spooled cable or wire, wherein the height of the floater above the outlet can be determined by measuring the distance of cable or wire which is extended from a spool. The spool may be spring-loaded, such that the floater is retracted towards the spool as the grain level falls. In a further alternative, the floater may be connected to the conveyor using a telescopic connection, wherein the floater and attached telescopic connection can be extended or retracted as the floater sits on the changing grain level in the grain bin.

In a further embodiment, it will be understood that the sensor system may comprise a plurality of floater devices arranged at different positions within the grain bin, each providing an indication of the height of the grain level at different locations in the grain bin. The use of multiple floater devices can allow for the calculation of a more accurate shape profile of the grain in the bin.

It will be understood that the grain level sensor system may be provided as a kit of parts for installation on or retrofitting to an existing grain bin or combine harvester.

While the invention is described in the context of a grain bin provided as part of a combine harvester, it will be understood that the grain level sensor system may be provided for use with any other type of grain bin, e.g. a separate grain tank. In addition, it will be understood that the invention may be used for level detection of other particulate material, and is not limited to use for measuring the level of harvested grain.

The invention is not limited to the embodiments described herein, and may be modified or adapted without departing from the scope of the present invention.

## Claims

1. A grain bin (12) having a grain level sensor system, the grain bin comprising a grain conveyor (20) having an outlet (26) for expelling grain into the grain bin, the grain level sensor system comprising:
a floater (34) adapted to sit on top of expelled grain from the grain conveyor, wherein the grain level in the grain bin is determined based on the height (h) of the floater above the outlet;
**characterised in that**
the floater is coupled with the outlet of the grain conveyor and the system comprises a linkage (36) connecting the outlet and the floater, such that the floater is moveable relative to the outlet.

2. The grain bin of claim 1, wherein the linkage comprises at least one angle sensor or rotary position sensor arranged to measure at least one angle of extension (α, β) of the linkage, wherein the height of the floater above the outlet is calculated based on said at least one angle of extension.

3. The grain bin of claim 1 or claim 2, wherein the grain conveyor is moveable relative to the grain bin, preferably the grain conveyor is pivotally mounted to the grain bin.

4. The grain bin of claim 3, wherein the grain conveyor comprises at least one angle sensor or rotary position sensor arranged to measure the pivot angle of the grain conveyor relative to the grain bin (δ), wherein the calculation of the grain level in bin is based on said pivot angle.

5. The grain bin of any one of claims 1-4, wherein the floater is made of an insulating or non-electrically conductive material, such as a plastics material, rubber or ceramics.

6. The grain bin of any one of claims 1-5, wherein the grain level sensor system further comprises at least one level sensor (32) arranged at a side of the grain bin to measure the grain level height at the side of the grain bin, wherein the height of the floater above the outlet and the grain level height at the side of the grain bin are used to determine a profile shape of the grain in the grain bin.

7. The grain bin of any one of claims 1-6, wherein the grain level sensor system is coupled with a data display system, wherein an indication of the determined grain level or grain shape profile is provided to an operator using the data display system.

8. The grain bin of any one of claims 1-7, wherein the grain level sensor system further comprises a warning system, wherein a warning is presented to an operator if the determined grain level or profile shape of grain exceeds a defined limit value.

9. The grain bin of claim 8, wherein the defined limit value is based on at least one of the following: stored terrain data; a current detected slope of the grain bin; a speed level.

10. A combine harvester having a grain bin as claimed in any one of claims 1-9.

## Patentansprüche

1. Kornvorratsbehälter (12) mit einem Kornfüllstandssensorsystem, wobei der Kornvorratsbehälter einen Kornförderer (20) mit einem Auslass (46) zum Ausstoßen von Korn in den Kornvorratsbehälter aufweist, wobei das Kornfüllstandssensorsystem das Folgende aufweist:
einen Schwimmer (34), der angepasst ist, um oben auf dem von dem Kornförderer ausgestoßenen Korn zu liegen, wobei der Kornfüllstand in dem Kornvorratsbehälter basierend auf der Höhe (h) des Schwimmers oberhalb des Auslasses bestimmt wird; **dadurch gekennzeichnet, dass**
der Schwimmer mit dem Auslass des Kornförderers gekoppelt ist und das System einen Verbinder (36) aufweist, der den Auslass und den Schwimmer so miteinander verbindet, dass der Schwimmer relativ zu dem Auslass beweglich ist.

2. Kornvorratsbehälter nach Anspruch 1, wobei der Verbinder mindestens einen Winkelsensor oder Drehpositionssensor aufweist, der zum Messen mindestens eines Extensionswinkels (α, β) des Verbinders angeordnet ist, wobei die Höhe des Schwimmers oberhalb des Auslasses basierend auf dem mindestens einen Extensionswinkel berechnet wird.

3. Kornvorratsbehälter nach Anspruch 1 oder 2, wobei der Kornförderer relativ zu dem Kornvorratsbehälter beweglich ist, wobei der Kornförderer vorzugsweise schwenkbar an dem Kornvorratsbehälter montiert ist.

4. Kornvorratsbehälter nach Anspruch 3, wobei der Kornförderer mindestens einen Winkelsensor oder Drehpositionssensor aufweist, der zum Messen des Schwenkwinkels (β) des Kornförderers relativ zu dem Kornvorratsbehälter angeordnet ist, wobei die Berechnung des Kornfüllstands auf dem Schwenkwinkel basiert.

5. Kornvorratsbehälter nach mindestens einem der Ansprüche 1-4, wobei der Schwimmer aus einem isolierenden oder nicht elektrisch leitenden Material, wie beispielsweise Kunststoff, Gummi oder Keramik, ausgebildet ist.

6. Kornvorratsbehälter nach mindestens einem der Ansprüche 1-5, wobei das Kornfüllstandssensorsystem weiterhin mindestens einen Füllstandssensor (32) aufweist, der an einer Seite des Kornvorratsbehälters angeordnet ist, um die Kornfüllstandshöhe des Kornvorratsbehälters zu messen, wobei die Höhe des Schwimmers oberhalb des Auslasses und die Kornfüllstandshöhe an der Seite des Kornvorratsbehälters verwendet werden, um eine Profilform des Korns in dem Kornvorratsbehälter zu bestimmen.

7. Kornvorratsbehälter nach mindestens einem der Ansprüche 1-6, wobei das Kornfüllstandssensorsystem mit einem Datenanzeigesystem gekoppelt ist, wobei eine Anzeige des bestimmten Kornfüllstands oder Kornformprofils durch einen Bediener unter Verwendung des Datenanzeigesystems bereitgestellt wird.

8. Kornvorratsbehälter nach mindestens einem der Ansprüche 1-7, wobei das Kornfüllstandssensorsystem weiterhin ein Warnsystem aufweist, wobei dem Bediener eine Warnung angezeigt wird, wenn ein Kornfüllstand oder ein Kornformprofil einen definierten Mindestwert überschreitet.

9. Kornvorratsbehälter nach Anspruch 8, wobei der definierte Mindestwert auf mindestens einem der folgenden Dinge basiert: gespeicherte Geländedaten; eine gegenwärtig detektierte Neigung des Kornvorratsbehälters; ein Geschwindigkeitsniveau.

10. Mähdrescher mit einem Kornvorratsbehälter nach mindestens einem der Ansprüche 1-9.

## Revendications

1. Compartiment à grain (12) comportant un dispositif de détection de niveau de grain, le compartiment à grain comprenant un convoyeur à grain (20) comportant une sortie (26) destinée à expulser les grains dans le compartiment à grain, le dispositif de détection de niveau de grain comprenant :
un flotteur (34) adapté de manière à être agencé au-dessus du grain expulsé à partir du convoyeur à grain, dans lequel le niveau de grain dans le compartiment à grain est déterminé sur la base de la hauteur (h) du flotteur au-dessus de la sortie ;
**caractérisé en ce que**
le flotteur est couplé à la sortie du convoyeur à grain et le dispositif comprend un mécanisme de liaison (36) reliant la sortie et le flotteur, de telle sorte que le flotteur peut être déplacé par rapport à la sortie.

2. Compartiment à grain selon la revendication 1, dans lequel le mécanisme de liaison comprend au moins un capteur d'angle ou capteur de position angulaire disposée afin de mesurer au moins un angle d'extension (α, β) du mécanisme de liaison, dans lequel la hauteur du flotteur au-dessus de la sortie est calculée sur la base dudit au moins un angle d'extension.

3. Compartiment à grain selon la revendication 1 ou 2, dans lequel le convoyeur à grain peut être déplacé par rapport au compartiment à grain, de préférence, le convoyeur à grain est monté de manière à pouvoir pivoter sur le compartiment à grain.

4. Compartiment à grain selon la revendication 3, dans lequel le convoyeur à grain comprend au moins un capteur d'angle ou capteur de position angulaire agencé de manière à mesurer l'angle de pivotement du convoyeur à grain par rapport au compartiment à grain (5), dans lequel le calcul du niveau de grain dans le compartiment est basé sur ledit angle de pivotement.

5. Compartiment à grain selon l'une quelconque des revendications 1 à 4, dans lequel le flotteur est réalisé en un matériau isolant ou non électriquement conducteur, tel qu'une matière plastique, du caoutchouc ou une céramique.

6. Compartiment à grain selon l'une quelconque des revendications 1 à 5, dans lequel le dispositif de détection de niveau de grain comprend, en outre, au moins un capteur de niveau (32) agencé sur un côté du compartiment à grain afin de mesurer la hauteur du niveau de grain sur le côté du compartiment à grain, dans lequel la hauteur du flotteur au-dessus de la sortie et la hauteur du niveau de grain sur le côté du compartiment à grain sont utilisées afin de déterminer une forme de profil du grain dans le compartiment à grain.

7. Compartiment à grain selon l'une quelconque des revendications 1 à 6, dans lequel le dispositif de détection de niveau de grain est couplé à un dispositif d'affichage de données, dans lequel une indication du niveau de grain ou du profil de forme de grain déterminé est délivrée à un opérateur en utilisant le dispositif d'affichage de données.

8. Compartiment à grain selon l'une quelconque des revendications 1 à 7, dans lequel le dispositif de détection de niveau de grain comprend, en outre, un dispositif d'alerte, dans lequel une alerte est présenté à un opérateur si le niveau de grain ou la forme de profil du grain déterminé dépasse une valeur limite définie.

9. Compartiment à grain selon la revendication 8,
dans lequel la valeur limite définie est basée sur au moins l'un des éléments suivants : les données de terrain mémorisées ; une pente courante détectée du compartiment à grain ; un niveau de vitesse.

10. Moissonneuse-batteuse comportant un compartiment à grain selon l'une quelconque des revendications 1 à 9.
